# EUROPÄISCHE PATENTANMELDUNG

(11) **EP 2 633 958 A2**
(43) Veröffentlichungstag der Anmeldung: **04.09.2013**
(21) Anmeldenummer: 12193331.1
(22) Anmeldetag: 20.11.2012
(51) Int. Cl.: B25F 5/00

(54) **Werkzeuggerät mit einer Vorrichtung zum Schalten zwischen einer ersten und zweiten Übersetzungsstufe durch Drehrichtungsumkehr**

(30) Priorität: 23.12.2011 DE 102011089771
(71) Anmelder: HILTI Aktiengesellschaft, 9494 Schaan (LI)
(72) Erfinder: Brugger, Peter, 6800 Feldkirch (AT); Schittl, Josef, 6712 Thüringen (AT)

(57) **Zusammenfassung**

Werkzeuggerät (1) aufweisend eine Antriebseinrichtung (2) mit einem Antriebsmotor (3) und einer Antriebswelle (4), die von dem Antriebsmotor (3) in einer Hinrichtung (12) und einer Rückrichtung (13) um eine Drehachse (14) drehbar ist, eine Abtriebseinrichtung (5) mit einer Abtriebswelle (6), die in einer Bewegungsrichtung (12) drehbar ist, ein zwischen der An- und Abtriebswelle (4, 6) angeordnetes Planetengetriebe (8) mit mehreren Planetengetriebekomponenten, die als Sonnenrad (21), Planetenträger (22), Planetenrad (23) und Hohlrad (24) ausgebildet sind, wobei die Antriebswelle (4) mit einer ersten der Planetengetriebekomponenten (21) drehfest gekoppelt ist, und eine Vorrichtung (10) zum Schalten zwischen einer ersten und zweiten Übersetzungsstufe des Planetengetriebes (8).

## Beschreibung

### Technisches Gebiet

Die vorliegende Erfindung betrifft ein Werkzeuggerät mit einer Vorrichtung zum Schalten zwischen einer ersten und zweiten Übersetzungsstufe gemäß dem Oberbegriff des Anspruchs 1.

Unter dem Begriff "Werkzeuggerät" werden im Rahmen der vorliegenden Erfindung alle Werkzeuggeräte zusammengefasst, die ein Bearbeitungswerkzeug während der Bearbeitung nur in einer Bewegungsrichtung antreiben. Typische Beispiele sind eine Wandsäge, ein Kernbohrgerät und ein Schlagbohrgerät.

### Stand der Technik

Bei der Bearbeitung mit Werkzeuggeräten erfordern verschiedene zu bearbeitende Untergründe, wie beispielsweise Holz, Beton und Stahl, angepasste Bearbeitungsparameter. Zu den Bearbeitungsparametern zählen neben dem geeigneten Bearbeitungswerkzeug beispielsweise das Drehmoment und die Drehzahl, mit der das Bearbeitungswerkzeug um eine Drehachse angetrieben wird. Bei Schlagbohrgeräten wird beispielsweise der Umsetzwinkel des Schlagwerkes abhängig vom zu bearbeitenden Untergrund verändert. Unterschiedliche Drehzahlen, Drehmomente, Umsetzwinkel oder andere geeignete Parameter werden durch verschiedene Getriebeübersetzungen realisiert. Zum Schalten zwischen einer ersten und zweiten Übersetzungsstufe sind mechanische Schaltvorrichtungen bekannt, die vom Anwender manuell zu betätigen sind. Nachteilig ist bei einigen Ausführungen, dass zur Betätigung der mechanischen Schaltvorrichtung das Werkzeuggerät teilweise demontiert werden muss.

Werkzeuggeräte, wie Wandsägen und Kernbohrgeräte, sind auf Führungsschienen oder Führungsständern montiert und werden beispielsweise motorisch verfahren. Bei Wandsägen muss der Anwender den Arbeitsbereich aus Sicherheitsgründen während der Bearbeitung verlassen. Nachteilig an den bekannten Schaltvorrichtungen ist bei Wandsägen außerdem, dass der Anwender nicht im Betrieb zwischen einer ersten und zweiten Übersetzungsstufe umschalten kann, sondern die Wandsäge anhalten, den Arbeitsbereich betreten, die mechanische Schaltvorrichtung betätigen, den Arbeitsbereich verlassen und die Wandsäge wieder anschalten muss.

### Darstellung der Erfindung

Die Aufgabe der vorliegenden Erfindung besteht demgegenüber darin, eine Vorrichtung zum Schalten zwischen einer ersten und zweiten Übersetzungsstufe für Werkzeuggeräte zu entwickeln, bei der die Umschaltung zwischen einer ersten und zweiten Übersetzungsstufe für den Anwender möglichst einfach gestaltet ist. Bei schienen- und ständergeführten Werkzeuggeräten soll der Anwender nicht in den Arbeitsbereich des Werkzeuggerätes eingreifen müssen, um zwischen einer ersten und zweiten Übersetzungsstufe umschalten zu können.

Diese Aufgabe wird bei dem eingangs genannten Werkzeuggerät erfindungsgemäß durch die Merkmale des unabhängigen Anspruchs 1 gelöst. Vorteilhafte Weiterbildungen sind in den abhängigen Ansprüchen angegeben.

Ein erfindungsgemäßes Werkzeuggerät umfasst:
■ eine Antriebseinrichtung mit einem Antriebsmotor und einer Antriebswelle, die von dem Antriebsmotor in einer Hinrichtung und einer Rückrichtung um eine Antriebs-Drehachse drehbar ist,
■ eine Abtriebseinrichtung mit einer Abtriebswelle, die in einer Bewegungsrichtung um eine Abtriebs-Drehachse drehbar ist,
■ ein zwischen der An- und Abtriebswelle angeordnetes Planetengetriebe mit mehreren Planetengetriebekomponenten, die als Sonnenrad, Planetenträger, Planetenrad und Hohlrad ausgebildet sind, wobei die Antriebswelle mit einer ersten der Planetengetriebekomponenten drehfest gekoppelt ist, und
■ eine Vorrichtung zum Schalten zwischen einer ersten und zweiten Übersetzungsstufe des Planetengetriebes mit einer ersten Sperreinrichtung, einer zweiten Sperreinrichtung, einer ersten Mitnahmeeinrichtung und einer zweiten Mitnahmeeinrichtung, wobei
   - die erste Sperreinrichtung und die erste Mitnahmeeinrichtung mit einer zweiten der Planetengetriebekomponenten gekoppelt sind,
   - die zweite Sperreinrichtung und die zweite Mitnahmeeinrichtung mit einer dritten der Planetengetriebekomponenten gekoppelt sind,
   - die Sperreinrichtungen die Drehung der gekoppelten Planetengetriebekomponenten gegen die Bewegungsrichtung sperren und
   - die Mitnahmeeinrichtungen das Drehmoment der gekoppelten Planetengetriebekomponenten in der Bewegungsrichtung auf die Abtriebswelle übertragen.

Die Schaltung zwischen der ersten und zweiten Übersetzungsstufe des Planetengetriebes erfolgt durch die Änderung der Drehrichtung der Antriebseinrichtung. Diese Art der Schaltung eignet sich für Werkzeuggeräte, bei denen das Bearbeitungswerkzeug nur in einer Bewegungsrichtung angetrieben wird. Der Anwender kann die Übersetzung über eine Bedienungseinrichtung zwischen einer ersten und zweiten Übersetzungsstufe schalten, in dem er die Drehrichtung des Antriebsmotors verändert.

Bevorzugt sind die erste und zweite Sperreinrichtung als Freilauf oder Sperrklinke ausgebildet. Bevorzugt sind die erste und zweite Mitnahmeeinrichtung als Freilauf ausgebildet.

### Ausführungsbeispiele

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Es zeigen:
- FIG. 1: ein erfindungsgemäßes Werkzeuggerät mit einer Antriebseinrichtung, einer Abtriebseinrichtung, einer Getriebeeinrichtung mit einem Planetengetriebe und einer Vorrichtung zum Schalten zwischen einer ersten und zweiten Übersetzungsstufe durch Umkehr der Drehrichtung der Antriebseinrichtung;
- FIGN. 2A, B: eine Ausführungsform der Vorrichtung zum Schalten zwischen einer ersten und zweiten Übersetzungsstufe in einer dreidimensionalen Ansicht (FIG. 2A) und in einem Längsschnitt entlang der An- und Abtriebswelle (FIG. 2B);
- FIG. 3: in einer schematischen Darstellung die Schaltvorrichtung der FIGN. 2A, B in der ersten Übersetzungsstufe, in der die Antriebseinrichtung im Uhrzeigersinn um eine Antriebs-Drehachse angetrieben wird; und
- FIG. 4: in einer schematischen Darstellung die Schaltvorrichtung der FIGN. 2A, B in der zweiten Übersetzungsstufe, in der die Antriebseinrichtung gegen den Uhrzeigersinn um die Antriebs-Drehachse angetrieben wird.

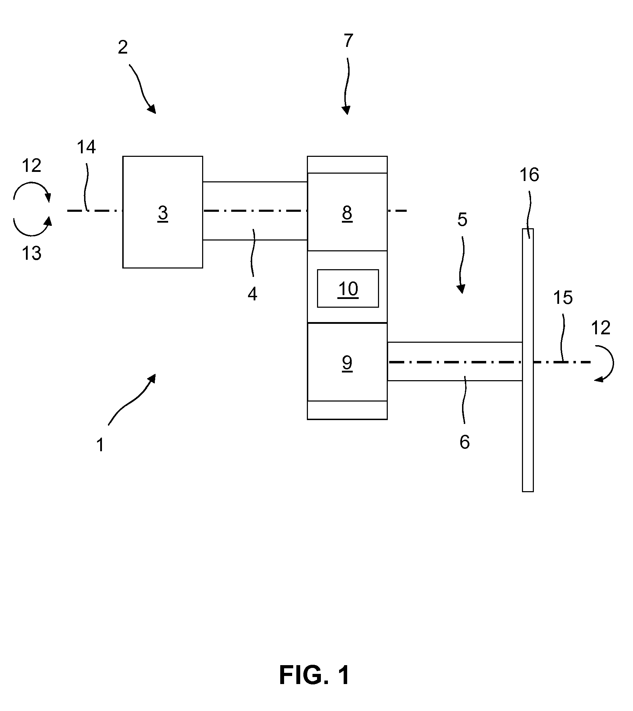

FIG. 1 zeigt ein erfindungsgemäßes Werkzeuggerät 1 in einer schematischen Darstellung. Das Werkzeuggerät ist beispielsweise als Wandsäge, Kernbohrgerät oder Schlagbohrgerät oder sonstiges Werkzeuggerät, bei dem das Bearbeitungswerkzeug nur in einer Bewegungsrichtung bewegt wird, ausgebildet.

Das Werkzeuggerät 1 umfasst eine Antriebseinrichtung **2** mit einem Antriebsmotor **3** und einer Antriebswelle **4**, eine Abtriebseinrichtung **5** mit einer Abtriebswelle **6**, eine Getriebeeinrichtung **7** mit einem Planetengetriebe **8** und einer weiteren Getriebeeinheit **9** sowie eine Vorrichtung **10** zum Schalten zwischen einer ersten und zweiten Übersetzungsstufe des Planetengetriebes 8. Die weitere Getriebeeinheit 9 wird beispielsweise eingesetzt, wenn die Antriebswelle 4 und die Abtriebswelle 6 nicht koaxial angeordnet sein sollen. In diesem Fall kann die Abtriebswelle 6 beispielsweise über ein Stirnradgetriebe parallel zur Antriebswelle 4 versetzt werden.

Die Antriebswelle 4 ist vom Antriebsmotor 3 in einer Hinrichtung **12** und einer Rückrichtung **13** um eine Antriebs-Drehachse **14** drehbar ausgebildet. Als Hinrichtung 12 ist die Drehrichtung im Uhrzeigersinn und als Rückrichtung 13 die Drehrichtung gegen den Uhrzeigersinn definiert. Die Abtriebswelle 6 wird unabhängig von der Drehrichtung 12, 13 der Antriebswelle 4 in derselben Bewegungsrichtung um eine Abtriebs-Drehachse **15** gedreht. Die Bewegungsrichtung der Antriebswelle 4 entspricht in der in FIG. 1 gezeigten Ausführung der Hinrichtung 12. Auf der Abtriebswelle 6 ist ein Bearbeitungswerkzeug **16** montiert, das drehfest mit der Abtriebswelle 6 verbindbar ist. Das Bearbeitungswerkzeug 16 wird mit der Abtriebswelle 6 unabhängig von der Drehrichtung 12, 13 des Antriebsmotors 3 immer in dieselbe Bewegungsrichtung 12 gedreht.

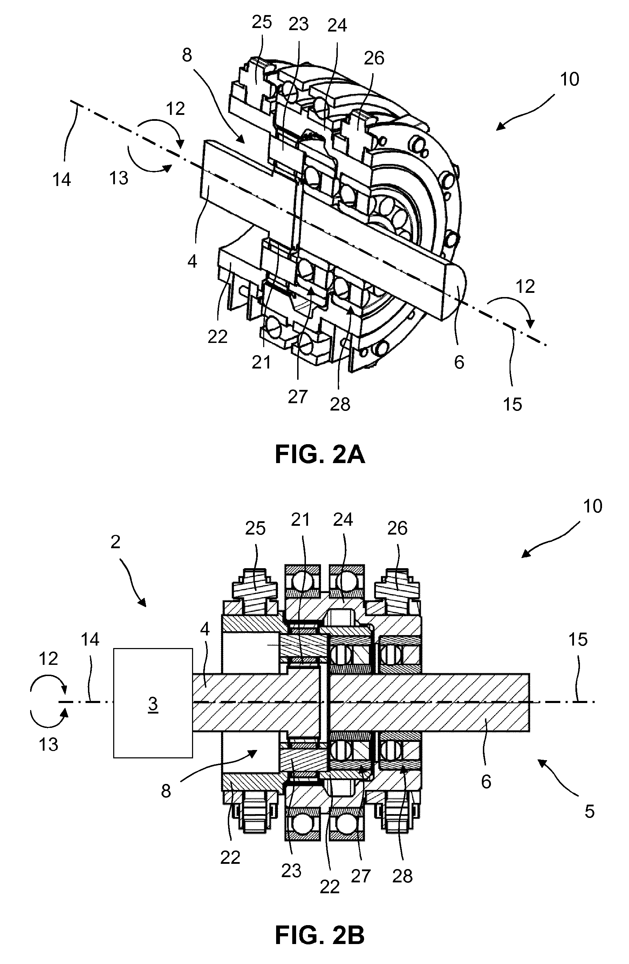

**FIGN. 2A**, **B** zeigen eine Ausführungsform der Vorrichtung 10 zum Schalten zwischen einer ersten und zweiten Übersetzungsstufe des Planetengetriebes 8 mit Hilfe der beiden Drehrichtungen 12, 13 der Antriebseinrichtung 2. Dabei zeigt FIG. 2A die Schaltvorrichtung 10 in einer dreidimensionalen Ansicht und FIG. 2B die Schaltvorrichtung 10 in einem Längsschnitt entlang der An- und Abtriebswelle 4, 6, die in der gezeigten Ausführungsform koaxial zueinander angeordnet sind.

Das Planetengetriebe 8 ist als einstufiges Planetengetriebe ausgebildet und umfasst ein als Sonnenrad ausgebildetes erstes Zentralrad **21**, einen Planetenträger **22**, mehrere Planetenräder **23** und ein als Hohlrad ausgebildetes zweites Zentralrad **24**. Die Übersetzung zwischen dem Sonnenrad 21 und dem Planetenträger 22 bestimmt eine erste Übersetzungsstufe des Planetengetriebes 8 und die Übersetzung zwischen dem Sonnenrad 21 und dem Hohlrad 24 eine zweite Übersetzungsstufe. Die Schaltung zwischen der ersten und zweiten Übersetzungsstufe des Planetengetriebes 8 wird über die beiden Drehrichtungen 12, 13 der Antriebseinrichtung 2 bewerkstelligt.

Die Schaltvorrichtung 10 umfasst eine erste und zweite Sperreinrichtung **25**, **26** sowie eine erste und zweite Mitnahmeeinrichtung **27**, **28**. Als Sperreinrichtung wird eine Komponente bezeichnet, die eine Drehbewegung in einer ersten Drehrichtung sperrt und in einer zweiten Drehrichtung frei gibt. Als Mitnahmeeinrichtung wird eine Komponente bezeichnet, die eine Drehbewegung in einer ersten Drehrichtung überträgt und in einer zweiten Drehrichtung freiläuft.

In der gezeigten Ausführungsform ist das Sonnenrad 21 drehfest mit der Antriebswelle 4 gekoppelt. Die erste Sperreinrichtung 25 ist mit dem Planetenträger 22 gekoppelt und sperrt die Drehung des Planetenträgers 22 in der Rückrichtung 13, d.h. der Planetenträger 22 ist in der Hinrichtung 12 drehbar und in der Rückrichtung 13 nicht drehbar ausgebildet. Die zweite Sperreinrichtung 26 ist mit dem Hohlrad 24 gekoppelt und sperrt die Drehung des Hohlrades 24 in der Rückrichtung 13, d.h. das Hohlrad 24 ist in der Hinrichtung 12 drehbar und in der Rückrichtung 13 nicht drehbar ausgebildet.

Die erste Mitnahmeeinrichtung 27 ist zwischen dem Planetenträger 22 und der Abtriebswelle 6 angeordnet und überträgt das Drehmoment des Planetenträgers 22 in der Hinrichtung 12 auf die Abtriebswelle 6. Bei einer Drehung des Planetenträgers 22 in der Rückrichtung 13 erfolgt keine Übertragung des Drehmomentes vom Planetenträger 22 auf die Abtriebswelle 6, der Planetenträger 22 läuft frei. Die zweite Mitnahmeeinrichtung 28 ist zwischen dem Hohlrad 24 und der Abtriebswelle 6 angeordnet und überträgt das Drehmoment des Hohlrades 24 in der Hinrichtung 12 auf die Abtriebswelle 6.

FIGN. 2A, B zeigen eine Ausführungsform einer Schaltvorrichtung 10 mit einer Antriebswelle 4, die von einem Antriebsmotor 3 angetrieben wird, und einer Abtriebswelle 6, die das Bearbeitungswerkzeug 16 um die Abtriebs-Drehachse 15 dreht. Alternativ kann die erfindungsgemäße Schaltvorrichtung eine Planetenstufe in einem mehrstufigen Planetengetriebe darstellen, wobei die Schaltvorrichtung als erste, mittlere oder letzte Planetenstufe eingesetzt werden kann. Außerdem können weitere Getriebekomponenten, wie eine Rutschkupplung, ein Stirnradgetriebe, zwischengeschaltet sein. Diese zusätzlichen Getriebekomponenten haben keinen Einfluss auf die Idee der Erfindung, nämlich die Schaltung zwischen einer ersten und zweiten Übersetzungsstufe über die Drehrichtung einer Antriebseinrichtung zu bewerkstelligen.

FIGN. 2A, B zeigen eine Ausführungsform, bei der das Sonnenrad 21 drehfest mit der Antriebswelle 4 ist und die Sperr- und Mitnahmeeinrichtungen 25-28 mit dem Planetenträger 22 und dem Hohlrad 24 gekoppelt sind. Grundsätzlich kann bei einem Planetengetriebe 8 jede Planetengetriebekomponente drehfest gekoppelt werden. Die Sperr- und Mitnahmeeinrichtungen werden mit den weiteren Planetengetriebekomponenten gekoppelt und steuern die Drehmomentübertragung in einer Richtung und verhindern sie in der anderen Richtung.

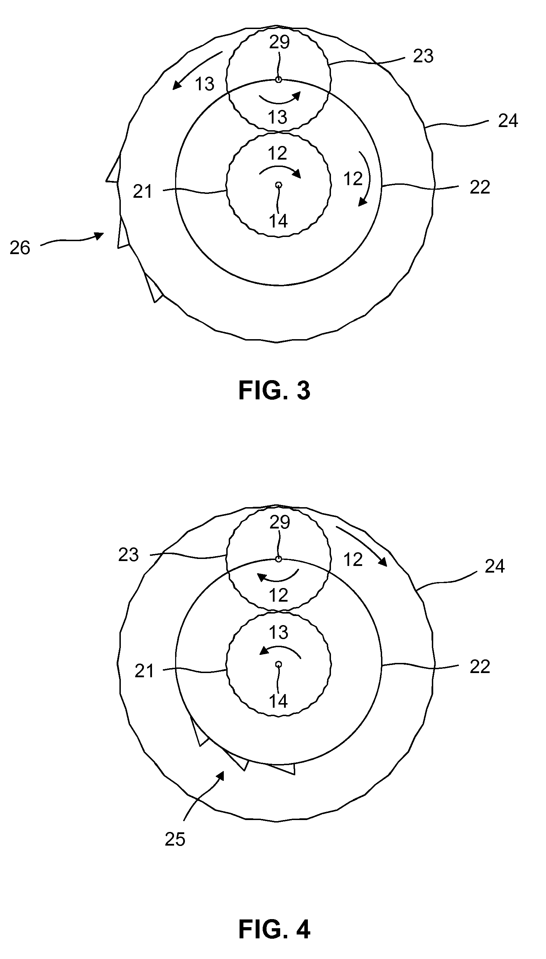

**FIG. 3** zeigt die Schaltvorrichtung 10 der FIGN. 2A, B in der ersten Übersetzungsstufe, in der die Antriebswelle 4 vom Antriebsmotor 3 in der Hinrichtung 12 um die Antriebs-Drehachse 14 angetrieben wird.

Das Drehmoment der Antriebswelle 4 wird über das drehfest verbundene Sonnenrad 21 auf die Planetenräder 23 übertragen, die sich in der Rückrichtung 13 um ihre Drehachse **29** drehen und im Hohlrad 24 in der Rückrichtung 13 abgewälzt werden. Da die Drehung des Hohlrades 24 in der Rückrichtung 13 durch die zweite Sperreinrichtung 26 gesperrt ist und die Planetenräder 23 im Planetenträger 22 gelagert sind, wird das Drehmoment von den Planetenrädern 23 auf den Planetenträger 22 übertragen, der sich in der Hinrichtung 12 dreht.

Der Planetenträger 22 ist über die erste Mitnahmeeinrichtung 27 mit der Abtriebswelle 6 gekoppelt, wobei die erste Mitnahmeeinrichtung 27 das Drehmoment in der Hinrichtung 12 auf die Abtriebswelle 6 überträgt und in der Rückrichtung 13 freiläuft. Das Drehmoment wird über die erste Mitnahmeeinrichtung 27 vom Planetenträger 22 auf die Abtriebswelle 6 übertragen, die sich gemeinsam mit dem Bearbeitungswerkzeug 16 in der Hinrichtung 12 dreht.

**FIG. 4** zeigt die Schaltvorrichtung 10 der FIG. 1 in der zweiten Übersetzungsstufe, in der die Abtriebswelle 4 vom Antriebsmotor 3 in der Rückrichtung 13 um die Antriebs-Drehachse 14 angetrieben wird.

Das Drehmoment der Antriebswelle 4 wird über das drehfest verbundene Sonnenrad 21 auf die Planetenräder 23 übertragen, die sich in der Hinrichtung 12 um ihre Drehachse 29 drehen. Die Planetenräder 23 möchten sich im Hohlrad 24 in der Rückrichtung 13 abwälzen. Da die Drehung des Planetenträgers 22, in dem die Planetenräder 23 gelagert sind, in der Rückrichtung 13 durch die erste Sperreinrichtung 25 gesperrt ist, steht der Planetenträger 22 und das Drehmoment wird von den Planetenrädern 23 auf das Hohlrad 24 übertragen, das sich in der Hinrichtung 12 dreht.

Das Hohlrad 24 ist über die zweite Mitnahmeeinrichtung 28 mit der Abtriebswelle 6 gekoppelt, wobei die zweite Mitnahmeeinrichtung 28 das Drehmoment in der Hinrichtung 12 auf die Abtriebswelle 6 überträgt und in der Rückrichtung 13 freiläuft. Das Drehmoment wird über die zweite Mitnahmeeinrichtung 28 vom Hohlrad 24 auf die Abtriebswelle 6 übertragen, die sich gemeinsam mit dem Bearbeitungswerkzeug 16 in der Hinrichtung 12 dreht.

## Patentansprüche

1. Werkzeuggerät (1) aufweisend
- eine Antriebseinrichtung (2) mit einem Antriebsmotor (3) und einer Antriebswelle (4), die von dem Antriebsmotor (3) in einer Hinrichtung (12) und einer Rückrichtung (13) um eine Antriebs-Drehachse (14) drehbar ist,
- eine Abtriebseinrichtung (5) mit einer Abtriebswelle (6), die in einer Bewegungsrichtung (12) drehbar ist,
- ein zwischen der An- und Abtriebswelle (4, 6) angeordnetes Planetengetriebe (8) mit mehreren Planetengetriebekomponenten, die als Sonnenrad (21), Planetenträger (22), Planetenrad (23) und Hohlrad (24) ausgebildet sind, wobei die Antriebswelle (4) mit einer ersten der Planetengetriebekomponenten (21) drehfest gekoppelt ist, und
- eine Vorrichtung (10) zum Schalten zwischen einer ersten und zweiten Übersetzungsstufe des Planetengetriebes (8) umfassend
eine erste Sperreinrichtung (25) und eine erste Mitnahmeeinrichtung (27), die mit einer zweiten der Planetengetriebekomponenten (22) gekoppelt sind, sowie eine zweite Sperreinrichtung (26) und eine zweite Mitnahmeeinrichtung (28), die mit einer dritten der Planetengetriebekomponenten (24) gekoppelt sind,
wobei die Sperreinrichtungen (25, 26) die Bewegung der zweiten und dritten der Planetengetriebekomponenten (22, 24) gegen die Bewegungsrichtung (13) sperren und die Mitnahmeeinrichtungen (27, 28) das Drehmoment der zweiten und dritten der Planetengetriebekomponenten (22, 24) in der Bewegungsrichtung (12) auf die Abtriebswelle (6) übertragen.

2. Werkzeuggerät nach Anspruch 1, **dadurch gekennzeichnet, dass** die erste und zweite Sperreinrichtung (25, 26) als Freilauf oder Sperrklinke ausgebildet sind.

3. Werkzeuggerät nach einem der Ansprüche 1 bis 2, **dadurch gekennzeichnet, dass** die erste und zweite Mitnahmeeinrichtung (27, 28) als Freilauf ausgebildet sind.
